# EUROPEAN PATENT APPLICATION

(11) **EP 4 135 098 A1**
(43) Date of publication of application: **15.02.2023**
(21) Application number: 21191190.4
(22) Date of filing: 13.08.2021
(51) Int. Cl.: H01M 10/48, H01M 10/42, H01M 50/284

(54) **DEVICE FOR MONITORING A BATTERY CELL ARRANGEMENT**

(71) Applicant: Airbus SAS, 31707 Blagnac (FR)
(72) Inventor: KAPAUN, Florian, 82024 Taufkirchen (DE)
(74) Representative: LKGLOBAL Lorenz & Kopf PartG mbB Patentanwälte

(57) **Abstract**

The invention relates to a device (10) for monitoring a battery cell arrangement (12). The device (10) comprises a first group of battery cells (14) and a first converter (16) being associated to the first group of battery cells (14). The first group of battery cells (14) comprises a plurality of battery cells (14a, 14b, 14c, 14d) being electrically connected in parallel to each other. The first converter (16) is configured to receive a temperature signal from each of the plurality of battery cells (14a, 14b, 14c, 14d) of the first group of battery cells (14). The invention also relates to an aircraft (100) comprising said device (10).

## Description

### Field of the invention

The invention relates to monitoring battery stacks comprising a plurality battery cells at different stack levels. In particular, the invention relates to a device for monitoring a battery cell arrangement.

### Technical Background

Battery cells are becoming more and more important for propulsion systems, for example propulsion systems of vehicles like aerial vehicles, ground vehicles or water vehicles. Usually, a plurality of battery cells is arranged in a so-called battery stack. The battery stack comprises multiple stack levels with several battery cells. In order to ensure a safe operation of the entire battery cell arrangement, monitoring systems are provided. However, such monitoring systems merely receive overall information regarding an entire stack level with many batteries. Based on this overall information, errors or malfunctions of the battery cell arrangement can be detected. However, such monitoring systems might be inaccurate if an error occurs only at a single battery cell of the arrangement of battery cells. Such scenarios are usually dealt with by applying mathematical models.

EP 3 576 182 A1 describes a protective device for a battery cell comprising a metallic jacket adapted to airtightly cover the battery cell, spacers arranged between the jacket and the battery cell maintaining a separation therebetween, and a venting mechanism adapted to release the electrochemical material under a predetermined condition.

US 2019 / 0 181 452 A1 describes a battery cell including an anode, a cathode, and a separator between the anode and the cathode, wherein at least one of the anode or the cathode includes at least a carbon fiber ply comprising carbon fibers, the carbon fiber ply having a thickness of less than 90 micrometers. Also described are a battery and an aircraft including such battery cell, and a method for manufacturing such battery cell.

### Summary of the invention

It may be seen as an object of the invention to improve the monitoring of a battery cell arrangement which comprises a plurality of battery cells.

A device according to the features of the independent claim is provided. Further embodiments of the invention are evident from the dependent claims and from the following description.

According to an aspect of the invention, a device for monitoring a battery cell arrangement is provided. The device comprises a first group of battery cells and a first converter, e.g., in the form of an analog-to-digital converter, a first controller or microcontroller, being associated to the first group of battery cells. The first group of battery cells comprises a plurality of battery cells being electrically connected in parallel to each other. The first converter is configured to receive a temperature signal from each of the plurality of battery cells of the first group of battery cells.

It is possible that the first converter is further configured to receive a voltage signal from each of the plurality of battery cells of the first group of battery cells. Only one voltage signal which is representative for all battery cells of the first group may be received and is sufficient, if all battery cells within the first group have the same voltage level. This is the case if the plurality of battery cells of the first group are electrically connected in parallel to each other. The voltage signal may be provided to the first converter in addition to the temperature signal.

The first converter may be provided in the form of a first controller, or the first converter may be part of a first controller. A first controller may also be used instead of the first converter.

The device is configured to monitor an entire battery cell arrangement, e.g., a battery stack having a plurality of battery cells arranged at different stack levels of the battery stack. This monitoring is achieved by obtaining a temperature value from each single cell of the battery cell arrangement. In particular, a temperature value can be provided that is associated or allocated to each battery cell of the battery cell arrangement. In this manner, it is possible to provide a single cell monitoring in large battery stacks and thereby increase safety. Such an arrangement can also be configured to reduce the wiring effort to communicatively couple the different components as will be described below. The system may be integrated into existing large battery configurations dealing with safety critical applications, for example battery propulsion systems etc.

With the inventive device, it is possible to measure temperatures on each cell and directly at the cells, connect the measurement lines, i.e., conducting paths, to a converter or microcontroller and digitize all values of one stack level, e.g., battery cells being electrically connected in parallel. As will be explained below, a printed circuit board (PCB) enables an interconnection of all cells, considerably reducing the wiring effort between the cells and an associated converter or controller which leads to smaller setups, increased safety and more flexibility regarding the setup of the whole battery stack.

As indicated above, the device comprises a first group of battery cells. The first group is electrically arranged in parallel and thus provides a first battery stack level of the battery cell arrangement. The first group of battery cells is associated, e.g., coupled, to the first converter in which a digitization of received temperature signals may be carried out. Each battery cell of the first group of battery cells may therefore be connected via a separate conductor path to the first converter. The first converter is configured to receive a temperature signal from each of the plurality of battery cells of the first group of battery cells via the conductor paths connecting each battery cell to the first converter.

The temperature signal may be generated by a respective temperature sensor at the respective battery cell. In particular, each battery cell may include a temperature sensor that produces a temperature signal for that battery cell. The temperature signal may be indicative of a measured temperature currently present at the battery cell at which the temperature is measured. It is noted that the temperature is individually measured at each battery cell of the first group of battery cells such that one respective temperature signal can be provided for each battery cell.

Based on the received temperature signals, the device can determine an error or a malfunction of any of the battery cells within the first group of battery cells. For example, if a temperature signal of a specified battery cell indicates a conspicuous temperature or otherwise exceeds or falls below a threshold, then the device may accurately indicate the error or malfunction of the specified battery cell, such that counter-measures like deactivation or isolation of said battery cell or the entire battery cell arrangement may be initiated.

The above features and characteristics of the inventive device are described with respect to one group of battery cells in which multiple battery cells are electrically connected in parallel to each other. However, the above-described principles can also be applied to multiple groups of battery cells, i.e., to multiple stack levels, wherein each group of battery cells comprises a plurality of battery cells being electrically connected in parallel to each other. This will also be described in more detail in the description of the Figures.

According to an embodiment, the first converter is configured to digitize the received temperature signal for each of the plurality of battery cells of the first group of battery cells in order to provide a digitized temperature value for each of the plurality of battery cells of the first group of battery cells.

In particular, the first converter receives multiple temperature signals, wherein at least one temperature signal is received from each battery cell of the first group of battery cells. Temperature signals may be generated at the respective battery cells constantly or sequentially at specified times. These temperature signals are then digitized by the first converter in order to provide corresponding temperature values that are indicative of the battery cell health, i.e., the current state of the battery cell. The digitized temperatures signals, i.e., the temperature values, may then be forwarded to a main controller for further processing. It may be possible, that the first converter only digitizes the temperature signals, and possibly also filters or otherwise adapts the temperature values.

In a next step, the digitized temperature values can be isolated and/or level-shifted and transferred via standard communication protocols to the main controller. This may be carried out via a digital communication interface like an SPI (Serial Peripheral Interface) or a CAN (Controller Area Network). The accurately monitored temperature values of each single battery cell allow to protect the stack from thermal runaway and overload conditions which typically start in one cell and then propagate to the entire battery stack.

According to an embodiment, the device comprises a main controller connected to the first converter, wherein the main controller is configured to process the digitized temperature value for each of the plurality of battery cells of the first group of battery cells, and wherein the main controller is configured to control each of the plurality of battery cells of the first group of battery cells or the entire first group based on the processed temperature values.

In other words, the main controller receives temperature values from the first converter, wherein each temperature value indicates an actual temperature at the respective battery cell at which the temperature was measured, and then uses these temperature values to generate suitable actions to be carried out on one or more of the battery cells.

The main controller may be a processor configured to process the digitized temperature values received from the first converter. The processing of the temperature values may include a determination whether one or more battery cells and which of the one or more battery cells have temperature values that deviate from a normal operating temperature. The main controller may be configured to deactivate, disable or isolate the one or more battery cells for which it has been determined that their temperature values deviate from a normal operating temperature. This may also encompass the deactivation or isolation of the entire battery cell arrangement, i.e., the entire battery stack that comprises a plurality of serially arranged groups of battery cells, wherein each group includes multiple battery cells arranged in parallel.

According to an embodiment, the main controller is configured to detect a deviation between a digitized temperature value of at least one of the plurality of battery cells of the first group of battery cells and a respective predetermined temperature value.

The deviation may indicate whether the battery cell has a temperature value that represents a non-normal operating condition of the respective battery cell or a normal operating condition of the respective battery cell. In other words, if the deviation gets too high, this might indicate a non-normal operation condition, i.e., an error or a malfunction, of the respective battery cell.

According to an embodiment, the main controller is configured to detect a deviation between a digitized temperature value of one of the plurality of battery cells of the first group of battery cells and a digitized temperature value of another one of the plurality of battery cells of the first group of battery cells.

The deviation may indicate that the battery cell for which a deviation has been detected is not operating under normal operating conditions, for example due to an error or a malfunction of that battery cell. The deviation may indicate such an error or malfunction if the difference between the digitized temperature value of the one of the plurality of battery cells and the digitized temperature value of the other one of the plurality of battery cells exceeds a threshold value.

For example, when the temperature of a battery cell rises it can be assessed whether this the temperature rise comes from a normal current rise (load step) or from an internal error of one or more battery cells. This can be done by temperature comparison between different battery cells within one stack level, i.e., within one group of battery cells. It should be considered that some differences in the cell temperature are normal so that a threshold may be defined that indicates a state which is not normal (leaving a safe operating area). If a single battery cell error is detected, the complete stack level or the complete battery stack (depending on the battery setup) may be disabled or deactivated and separated from the rest of the system (re-configuration). The inventive device therefore provides a considerable increase in safety and reliability since every single cell state is known. This also provides the advantage that the collected information from the received temperature signals may be used to establish a life-time model for the entire battery stack, an early failure detection for the entire battery stack and/or an overload detection for the entire battery stack.

According to an embodiment, the device further comprises a first printed circuit board which includes the first converter and a plurality of conductor paths, wherein each of the plurality of conductor paths of the first printed circuit board is associated to a respective one of the battery cells of the first group of battery cells.

This means that the first converter may be directly coupled to or may be part of the first printed circuit board, i.e., the first converter may be integrated into the first printed circuit board. In addition, the plurality of conductor paths are also part of the first printed circuit board, i.e., are coupled to or printed on the first printed circuit board. According to an embodiment, the first printed circuit board spatially, e.g., geometrically, extends over the plurality of battery cells of the first group of battery cells.

In this manner, a considerable reduction of wirings that connect the battery cells with the first converter can be achieved. In order to transmit the temperature signal from the battery cell, for example from a temperature sensor at the battery cell, to the first converter, the conductor path extends on the first printed circuit board and between the first converter and the respective battery cell. To reduce or even eliminate free wirings, the first printed circuit board may physically extend over the entire set of battery cells of the first group of battery cells. It is possible that there is a direct connection of the temperature sensors on the battery cells to the conductor paths on the first printed circuit board without any further wiring between the conductor paths and the corresponding battery cell temperature sensors. This provides for a compact design in which no or less free hanging wirings are present.

According to an embodiment, each of the plurality of battery cells of the first group of battery cells is coupled to a respective temperature sensor.

This means that each battery cell has its own temperature sensor which provides a temperature signal for the respective battery cell. The temperature sensor may be present in the form of a thermocouple attached at specified attachment points on or in the battery cell.

The temperature sensors may be directly coupled to or even integrated into the first printed circuit board and connected by bond wires or other types of connectors to the battery cell, providing an enhanced robustness and reliability. Additionally, the temperature sensors may be tested in a functionality check during run-time operation of the battery cell arrangement with the help of test currents.

According to an embodiment, the temperature signal is provided, i.e., generated, at the temperature sensor and transmitted via a respective one of the plurality of conductor paths of the first printed circuit board.

Each battery cell of the first group of battery cells may have its own associated temperature sensor and its own associated conductor path coupling the temperature sensor to the first converter such that the temperature signals can be received from each battery cell. The temperature signals may be provided constantly to the first converter. However, it is possible that temperature signals are repeatedly or sequentially transmitted from each battery cell to the first converter after a couple of milliseconds, seconds, or minutes.

According to an embodiment, the main controller and/or the first converter is configured to apply a test current to each temperature sensor.

Such a test current may be repeatedly applied, for example, after a couple of milliseconds, seconds, or minutes. For example, in case of failure of one sensor, this may be securely detected by an internal test that is performed every few seconds. Additionally, a failure of a battery cell may be detected based on the temperatures of the surrounding or neighboring battery cells. For example, a thermal coupling between the battery cells may help to estimate a failure of a temperature sensor. If only one or some temperature sensors stop working, there might be no influence on the safety or system functionality since many temperatures on one battery cell stack are measured simultaneously and all of them are thermally coupled.

According to an embodiment, the device comprises a second group of battery cells, the second group of battery cells being electrically connected in series to the first group of battery cells. The device further comprises a second converter, e.g., in the form of an analog-to-digital converter, a controller or microcontroller, being coupled to the main controller and associated to the second group of battery cells. The second group of battery cells comprises a plurality of battery cells being electrically connected in parallel to each other, wherein the second converteris configured to receive a temperature signal from each of the plurality of battery cells of the second group of battery cells. The second converter may be provided in the form of a second controller, or the second converter may be part of a second controller. A second controller may also be used instead of the second converter.

It is understood that the features and characteristics described with respect to the first group of battery cells and the first converter may also apply to the second group of battery cells and the second converter. It is also understood that the entire device can be extended to further groups of battery cells, wherein each group of battery cells is electrically connected in series to each other, while the battery cells within a group of battery cells are electrically connected in parallel.

According to an embodiment, the second converter is configured to digitize the received temperature signal for each of the plurality of battery cells of the second group of battery cells in order to provide a digitized temperature value for each of the plurality of battery cells of the second group of battery cells.

In particular, the second converter receives multiple temperature signals, wherein at least one temperature signal is received from each battery cell of the second group of battery cells. These temperature signals are then digitized by the second converter in order to provide corresponding temperature values that are indicative of the battery cells of the second group of batteries. Like the first converter, the second converter forwards the digitized temperatures signals, i.e., the temperature values, to the main controller for further processing. It may be possible, that the second converter merely digitizes the temperature signals, and possibly also filters or otherwise adapts the temperature values.

The digitized temperature values from the second converter can be isolated and/or level shifted and transferred via standard communication protocols to the main controller. This may be carried out via a digital communication interface like an SPI (Serial Peripheral Interface) or a CAN (Controller Area Network). The accurately monitored temperature values of each single battery cell of the second group allow to protect the stack from thermal runaway and overload conditions which typically start in one cell and then propagate to the entire battery stack.

According to an embodiment, the main controller is configured to process the digitized temperature value for each of the plurality of battery cells of the second group of battery cells, wherein the main controller is configured to control each of the plurality of battery cells of the second group of battery cells based on the processed temperature values.

In other words, the main controller receives temperature values from the second converter, wherein each temperature value indicates an actual temperature at the respective battery cell of the second group at which the temperature was measured, and then uses these temperature values to generate suitable actions to be carried out on one or more of the battery cells.

The main controller may be a processor configured to process the digitized temperature values received from the second converter. The processing of the temperature values may include a determination whether one or more battery cells and which of the one or more battery cells have temperature values that deviate from a normal operating temperature. The main controller may be configured to deactivate, disable or isolate the one or more battery cells of the second group for which it has been determined that their temperature values deviate from a normal operating temperature. This may also encompass the deactivation or isolation of the entire battery cell arrangement, i.e., the entire battery stack.

According to an embodiment, the device comprises a second printed circuit board which includes the second converter and a plurality of conductor paths, wherein each of the plurality of conductor paths of the second printed circuit board is associated to a respective one of the battery cells of the second group of battery cells.

This means that the second converter may be directly coupled to or may be part of the second printed circuit board, i.e., the second converter may be integrated into the second printed circuit board. In addition, the plurality of conductor paths of the second printed circuit board are also part of the second printed circuit board, i.e., are coupled to or printed on the second printed circuit board.

According to an embodiment, the second printed circuit board spatially, e.g., geometrically, extends over the plurality of battery cells of the second group of battery cells.

In this manner, a considerable reduction of wirings that connect the battery cells of the second group with the second converter can be achieved. In order to transmit the temperature signal from the battery cell, for example from a temperature sensor at the battery cell, to the second converter, the conductor path extends on the second printed circuit board and between the second converter and the respective battery cell of the second group. To reduce or even eliminate free wirings, the second printed circuit board may physically extend over the entire set of battery cells of the second group of battery cells. It is possible that there is a direct connection of the temperature sensors on the battery cells to the conductor paths on the second printed circuit board without any further wiring between the connector paths and the corresponding battery cell temperature sensors of the second group. This provides for a compact design in which no or less free hanging wirings are present.

According to an example, there is only one printed circuit board spatially, e.g., geometrically, extending over both the battery cells of the first group of battery cells and the battery cells of the second group of battery cells. In other words, it is possible that one single printed circuit board extends and therefore covers the battery cells at different stack levels, thereby reducing the number of different components required. This provides the advantage to directly couple all temperature or voltage sensors at the battery cells of the different battery cell groups via conductor paths, wherein each conductor path is on the same printed circuit board. This principle may also apply to more than two groups of battery cells.

According to an aspect, an aircraft comprising a device as described herein is provided.

The aircraft may be a manned or unmanned aerial vehicle. For example, the aircraft is a transport or a military aircraft. However, it should be understood that the inventive device may be integrated in all kinds of applications where batteries operate as energy sources and need to be monitored. Therefore, the inventive device may be integrated into all kinds of stationary platforms, such as power plants, or moving platforms, such as vehicles.

### Brief description of the drawings

The present invention will hereinafter be described in conjunction with the following drawing figures, wherein like numerals denote like elements, and wherein:
- Fig. 1: shows a battery cell arrangement having a first, second and third group of battery cells, according to an exemplary embodiment.
- Fig. 2: shows a first printed circuit board spatially extending over battery cells of a first group of battery cells, according to an exemplary embodiment.
- Fig. 3: shows a second printed circuit board spatially extending over battery cells of a second group of battery cells, according to an exemplary embodiment.
- Fig. 4: shows a battery cell having a temperature sensor coupled to a controller via a conductor path, according to an exemplary embodiment.
- Fig. 5: shows an aircraft having a device for monitoring a battery cell arrangement, according to an exemplary embodiment.

### Detailed description of exemplary embodiments

The representations and illustrations in the drawings are schematic and not to scale. A better understanding of the method and system described above may be obtained through a review of the illustrations accompanying this application together with a review of the detailed description that follows.

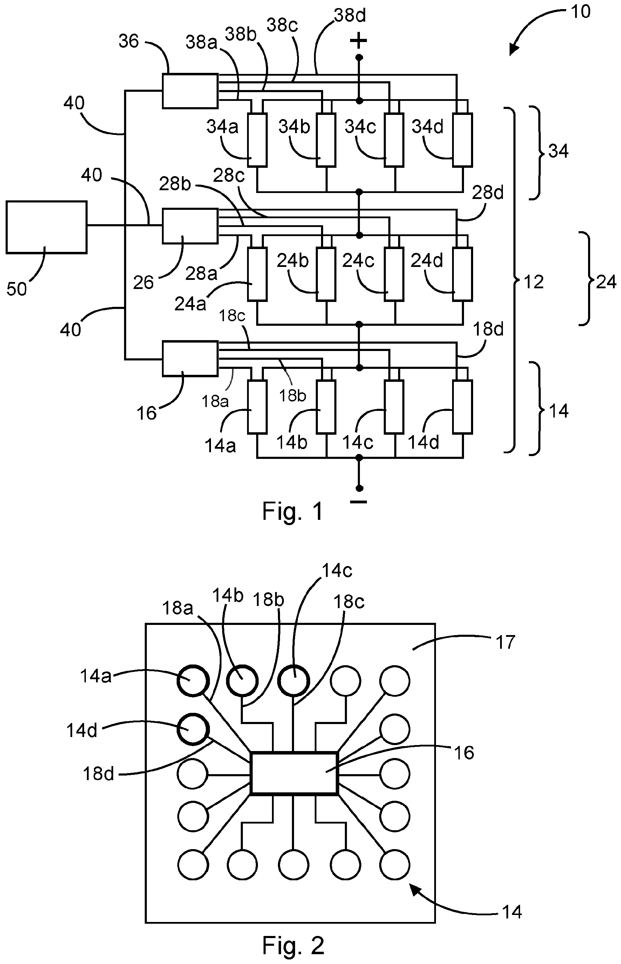

Fig. 1 shows a battery cell arrangement 12, i.e., a battery cell stack 12, having a first group of battery cells 14, a second group of battery cells 24 and third group of battery cells 34. A device 10 for monitoring the battery cell arrangement 12 will be described in the following. The positive terminal of the battery cell arrangement 12 is indicated with "+" at the top of the Figure. The negative terminal of the battery cell arrangement 12 is indicated with "-" at the bottom of the Figure

The device 10 comprises a first group of battery cells 14 and a first converter which is integrated into or part of a first controller 16 being associated to the first group of battery cells 14. In particular, the first controller 16 is coupled to each battery cell 14a, 14b, 14c, 14d of the first group of battery cells 14. In the example shown in Fig. 1, the first group of battery cells 14 comprises the four battery cells 14a, 14b, 14c, 14d which are electrically connected in parallel to each other. Although not shown, it will be appreciated that more than four battery cells may be included in the first group of battery cells 14. The four battery cells 14a, 14b, 14c, 14d of the first group 14 may constitute a so-called first stack level of the battery cell stack 12. The first controller 16 receives a temperature signal from each of the four battery cells 14a, 14b, 14c, 14d of the first group of battery cells 14. A temperature sensor (not shown) may be mounted to each battery cell 14a, 14b, 14c, 14d of the first group 14 such that the temperature sensors provide the corresponding temperature signals from each battery cell 14a, 14b, 14c, 14d of the first group 14. In addition, a voltage sensor (not shown) may be included in each battery cell 14a, 14b, 14c, 14d of the first group 14 such that the voltage sensors provide corresponding voltage signals from each battery cell 14a, 14b, 14c, 14d of the first group 14. The temperature signals may indicate a current temperature at the respective battery cell and the voltage signals may indicate a current voltage level applied at the respective battery cell. The temperature signal and/or the voltage signal may then be transmitted via conductor paths 18a, 18b, 18c, 18d to the first controller 16 where each temperature signal and/or voltage signal may be digitized and forwarded via a digital communication interface 40 to a main controller 50 for further processing. In the example of Fig. 1, the first battery cell 14a of the first group 14 is coupled via a first conductor path 18a to the first controller 16 to transmit a temperature and/or voltage signal to the first controller 16. The second battery cell 14b of the first group 14 is coupled via a second conductor path 18b to the first controller 16 to transmit a temperature and/or voltage signal to the first controller 16. The third battery cell 14c of the first group 14 is coupled via a third conductor path 18c to the first controller 16 to transmit a temperature and/or voltage signal to the first controller 16. The fourth battery cell 14d of the first group 14 is coupled via a fourth conductor path 18d to the first controller 16 to transmit a temperature and/or voltage signal to the first controller 16.

The device 10 further comprises a second group of battery cells 24 and a second converter which is integrated into or part of a second controller 26 being associated to the second group of battery cells 24. In particular, the second controller 26 is coupled to each battery cell 24a, 24b, 24c, 24d of the second group of battery cells 24. In the example shown in Fig. 1, the second group of battery cells 24 comprises the four battery cells 24a, 24b, 24c, 24d which are electrically connected in parallel to each other. Although not shown, it will be appreciated that more than four battery cells may be included in the second group of battery cells 24. The four battery cells 24a, 24b, 24c, 24d of the second group 24 may constitute a so-called second stack level of the battery cell stack 12. The second controller 26 receives a temperature signal from each of the four battery cells 24a, 24b, 24c, 24d of the second group of battery cells 24. A temperature sensor (not shown) may be mounted to each battery cell 24a, 24b, 24c, 24d of the second group 24 such that the temperature sensors provide the corresponding temperature signals from each battery cell 24a, 24b, 24c, 24d of the second group 24. In addition, a voltage sensor (not shown) may be included in each battery cell 24a, 24b, 24c, 24d of the second group 24 such that the voltage sensors provide corresponding voltage signals from each battery cell 24a, 24b, 24c, 24d of the second group 24. The temperature signals may indicate a current temperature at the respective battery cell and the voltage signals may indicate a current voltage level applied at the respective battery cell. The temperature signal and/or the voltage signal may then be transmitted via conductor paths 28a, 28b, 28c, 28d to the second controller 26 where each temperature signal and/or voltage signal may be digitized and forwarded via the digital communication interface 40 to the main controller 50 for further processing. In the example of Fig. 1, the first battery cell 24a of the second group 24 is coupled via a first conductor path 28a to the second controller 26 to transmit a temperature and/or voltage signal to the second controller 26. The second battery cell 24b of the second group 24 is coupled via a second conductor path 28b to the second controller 26 to transmit a temperature and/or voltage signal to the second controller 26. The third battery cell 24c of the second group 24 is coupled via a third conductor path 28c to the second controller 26 to transmit a temperature and/or voltage signal to the second controller 26. The fourth battery cell 24d of the second group 24 is coupled via a fourth conductor path 28d to the second controller 26 to transmit a temperature and/or voltage signal to the second controller 26.

The device 10 further comprises a third group of battery cells 34 and a third converter which is integrated into or part of a third controller 36 being associated to the third group of battery cells 34. In particular, the third controller 36 is coupled to each battery cell 34a, 34b, 34c, 34d of the third group of battery cells 34. In the example shown in Fig. 1, the third group of battery cells 34 comprises the four battery cells 34a, 34b, 34c, 34d which are electrically connected in parallel to each other. Although not shown, it will be appreciated that more than four battery cells may be included in the third group of battery cells 34. The four battery cells 34a, 34b, 34c, 34d of the third group 34 may constitute a so-called third stack level of the battery cell stack 12. The third controller 36 receives a temperature signal from each of the four battery cells 34a, 34b, 34c, 34d of the third group of battery cells 34. A temperature sensor (not shown) may be mounted to each battery cell 34a, 34b, 34c, 34d of the third group 34 such that the temperature sensors provide the corresponding temperature signals from each battery cell 34a, 34b, 34c, 34d of the third group 34. In addition, a voltage sensor (not shown) may be included in each battery cell 34a, 34b, 34c, 34d of the third group 34 such that the voltage sensors provide corresponding voltage signals from each battery cell 34a, 34b, 34c, 34d of the third group 34. The temperature signals may indicate a current temperature at the respective battery cell and the voltage signals may indicate a current voltage level applied at the respective battery cell. The temperature signal and/or the voltage signal may then be transmitted via conductor paths 38a, 38b, 38c, 38d to the third controller 36 where each temperature signal and/or voltage signal may be digitized and forwarded via the digital communication interface 40 to the main controller 50 for further processing. Thus, temperature values from all three groups of battery cells 14, 24, 34 can be processed by the same main controller 50. In the example of Fig. 1, the first battery cell 34a of the third group 34 is coupled via a first conductor path 38a to the third controller 36 to transmit a temperature and/or voltage signal to the third controller 36. The second battery cell 34b of the third group 34 is coupled via a second conductor path 38b to the third controller 36 to transmit a temperature and/or voltage signal to the third controller 36. The third battery cell 34c of the third group 34 is coupled via a third conductor path 38c to the third controller 36 to transmit a temperature and/or voltage signal to the third controller 36. The fourth battery cell 34d of the third group 34 is coupled via a fourth conductor path 38d to the third controller 36 to transmit a temperature and/or voltage signal to the third controller 36.

As can be seen in Fig. 1, the first group of battery cells 14, the second group of battery calls 24 and the third group of battery cells 34 are electrically connected in series to each other. It will be appreciated that more than three groups of battery cells may be arrangement in the battery cell arrangement 12.

In general, Fig. 1 shows a setup how a battery cell arrangement 12 of the device 10 can be configured. Such battery stacks 12 may be used for high power applications, for example up to 800V. In particular, hundreds of battery cells may be arranged in parallel, i.e., within one group of battery cells. In addition, multiple battery cell groups may be arranged in series, wherein each battery cell group comprises multiple battery cells being arranged in parallel, to form a battery stack 12 with high voltage and high current capability. Those battery cells that are electrically arranged in parallel are on the same electric potential (stack level) which easily allows to perform measurements, e.g., temperature and/or voltage measurements, on the single battery cells.

The controllers 16, 26 and 36 may be microcontrollers. Using microcontrollers instead of external analog-to-digital converters (ADC) and/or using additional controllers for the communication provides the advantage that each microcontroller can digitize a huge amount of channels, for example more than 40 channels, at low cost. Furthermore, a compensation and filtering of measurements may be carried out by the microcontrollers and flexibility is achieved since microcontrollers can have an own code. In addition, microcontrollers require only a small amount of space. For example, an LQFP128 (low profile quad flat package) integrated circuit has a lateral dimension of only 14 mm x 14 mm. Furthermore, the communication is directly integrated into the microcontroller. Considering the above advantages of using microcontrollers for the first, second and third controllers 16, 26 and 36, the entire device 10 can be easily scaled and adapted to different requirements.

Fig. 2 shows a first printed circuit board 17 spatially extending over the battery cells 14a, 14b, 14c, 14d of the first group of battery cells 14. In particular, the device 10 of Fig. 1 may comprise the first printed circuit board 17 which includes the first controller 16 and the plurality of conductor paths 18a, 18b, 18c, 18d wherein each of the plurality of conductor paths 18a, 18b, 18c, 18d of the first printed circuit board 17 is communicatively coupled to a respective one of the battery cells 14a, 14b, 14c, 14d of the first group of battery cells 14. The conductor paths 18a, 18b, 18c, 18d are printed on or integrated in the first printed circuit board 17 such that no or very few free wirings are present to connect the battery cells 14a, 14b, 14c, 14d, in particular the temperature sensors and/or voltage sensors of these battery cells 14a, 14b, 14c, 14d, to the first controller 16.

To achieve such a coupling between the first controller 16 and the battery cells 14a, 14b, 14c, 14d, the printed circuit board 17 spatially extends over the plurality of battery cells 14a, 14b, 14c, 14d of the first group of battery cells 14. This means that the first circuit board 17 may (geometrically) extend beyond a lateral extent of the arrangement of the battery cells 14a, 14b, 14c, 14d of the first group 14 as shown in Fig. 2. In other words, the first printed circuit board 17 may cover all battery cells 14a, 14b, 14c, 14d of the first group 14 when seen from a top view as shown in Fig. 2.

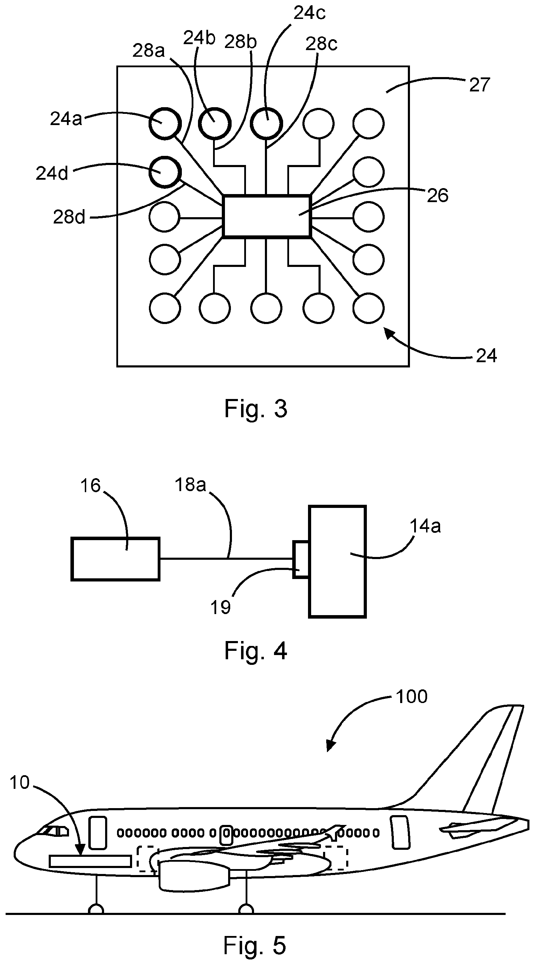

This may also apply for the second group of battery cells 24 as shown in Fig. 3. In particular, Fig. 3 shows a second printed circuit board 27 spatially extending over the battery cells 24a, 24b, 24c, 24d of the second group of battery cells 24. The device 10 of Fig. 1 may thus comprise the second printed circuit board 27 which includes the second controller 26 and the plurality of conductor paths 28a, 28b, 28c, 28d wherein each of the plurality of conductor paths 28a, 28b, 28c, 28d of the second printed circuit board 27 is communicatively coupled to a respective one of the battery cells 24a, 24b, 24c, 24d of the second group of battery cells 24. The conductor paths 28a, 28b, 28c, 28d are printed on or integrated in the second printed circuit board 27 such that no or very few free wirings are present to connect the battery cells 24a, 24b, 24c, 24d, in particular the temperature sensors and/or voltage sensors of these battery cells 24a, 24b, 24c, 24d, to the second controller 26.

Although not further shown and described herein, the above features and characteristics regarding the first and second printed circuit boards 17, 27 may also apply to a third printed circuit board which includes the conductor paths 38a, 38b, 38c, 38d and the third controller 36, and also further printed circuit boards.

Fig. 4 shows a battery cell 14a having a temperature sensor 19 coupled to a controller 16 via a conductor path 18a. This shows an example how a temperature sensor 19 can be mounted to each of the battery cells of the first, second and third groups of battery cells 14, 24, 34. It is possible that the entire conductor path 18a or almost the entire conductor path 18a is part of, e.g., integrated in, a printed circuit board as described with reference to Figures 2 and 3.

Fig. 5 shows an aircraft 100 in which a device 10 for monitoring a battery cell arrangement 12 as described herein is integrated. The aircraft 100 may be a passenger aircraft or a transport aircraft. The device 10 may enable a monitoring of a propulsion battery system or drive battery system of the aircraft 100.

## Claims

1. Device (10) for monitoring a battery cell arrangement (12), comprising:
a first group of battery cells (14);
a first converter (16) being associated to the first group of battery cells (14);
wherein the first group of battery cells (14) comprises a plurality of battery cells (14a, 14b, 14c, 14d) being electrically connected in parallel to each other;
wherein the first converter (16) is configured to receive a temperature signal from each of the plurality of battery cells (14a, 14b, 14c, 14d) of the first group of battery cells (14).

2. Device (10) of claim 1,
wherein the first converter (16) is configured to digitize the received temperature signal for each of the plurality of battery cells (14a, 14b, 14c, 14d) of the first group of battery cells (14) in order to provide a digitized temperature value for each of the plurality of battery cells (14a, 14b, 14c, 14d) of the first group of battery cells (14).

3. Device (10) of claim 2, comprising:
a main controller (50) connected to the first converter (16);
wherein the main controller (50) is configured to process the digitized temperature value for each of the plurality of battery cells (14a, 14b, 14c, 14d) of the first group of battery cells (14);
wherein the main controller (50) is configured to control each of the plurality of battery cells (14a, 14b, 14c, 14d) of the first group of battery cells (14) based on the processed temperature values.

4. Device (10) of claim 3,
wherein the main controller (50) is configured to detect a deviation between a digitized temperature value of at least one of the plurality of battery cells (14a, 14b, 14c, 14d) of the first group of battery cells (14) and a respective predetermined temperature value.

5. Device (10) according to any one of claims 3 to 4,
wherein the main controller (50) is configured to detect a deviation between a digitized temperature value of one of the plurality of battery cells (14a, 14b, 14c, 14d) of the first group of battery cells (14) and a digitized temperature value of another one of the plurality of battery cells (14a, 14b, 14c, 14d) of the first group of battery cells (14).

6. Device (10) according to any one of the preceding claims, comprising:
a first printed circuit board (17) which includes the first converter (16) and a plurality of conductor paths (18a, 18b, 18c, 18d);
wherein each of the plurality of conductor paths (18a, 18b, 18c, 18d) of the first printed circuit board (17) is associated to a respective one of the battery cells (14a, 14b, 14c, 14d) of the first group of battery cells (14).

7. Device (10) of claim 6,
wherein the first printed circuit board (18) spatially extends over the plurality of battery cells (14a, 14b, 14c, 14d) of the first group of battery cells (14).

8. Device (10) according to any one of claims 6 to 7,
wherein each of the plurality of battery cells (14a, 14b, 14c, 14d) of the first group of battery cells (14) is coupled to a respective temperature sensor (19);
wherein the temperature signal is provided at the temperature sensor (19) and transmitted via a respective one of the plurality of conductor paths (18a, 18b, 18c, 18d) of the first printed circuit board (17).

9. Device (10) according to claim 8,
wherein the main controller (50) and/or the first converter (16) is configured to apply a test current to each temperature sensor (19).

10. Device (10) according to claim 3, comprising:
a second group of battery cells (24);
wherein the second group of battery cells (24) is electrically connected in series to the first group of battery cells (14);
a second converter (26) being coupled to the main controller (50) and associated to the second group of battery cells (24);
wherein the second group of battery cells (24) comprises a plurality of battery cells (24a, 24b, 24c, 24d) being electrically connected in parallel to each other;
wherein the second converter (26) is configured to receive a temperature signal from each of the plurality of battery cells (24a, 24b, 24c, 24d) of the second group of battery cells (24).

11. Device (10) of claim 10,
wherein the second converter (26) is configured to digitize the received temperature signal for each of the plurality of battery cells (24a, 24b, 24c, 24d) of the second group of battery cells (24) in order to provide a digitized temperature value for each of the plurality of battery cells (24a, 24b, 24c, 24d) of the second group of battery cells (24).

12. Device (10) of claim 11, comprising:
wherein the main controller (50) is configured to process the digitized temperature value for each of the plurality of battery cells (24a, 24b, 24c, 24d) of the second group of battery cells (24);
wherein the main controller (50) is configured to control each of the plurality of battery cells (24a, 24b, 24c, 24d) of the second group of battery cells (24) based on the processed temperature values.

13. Device (10) according to any one of claims 10 to 12, comprising:
a second printed circuit board (27) which includes the second converter (26) and a plurality of conductor paths (28a, 28b, 28c, 28d);
wherein each of the plurality of conductor paths (28a, 28b, 28c, 28d) of the second printed circuit board (27) is associated to a respective one of the battery cells (24a, 24b, 24c, 24d) of the second group of battery cells (24).

14. Device (10) of claim 13,
wherein the second printed circuit board (27) spatially extends over the plurality of battery cells (24a, 24b, 24c, 24d) of the second group of battery cells (24).

15. Aircraft (100) comprising a device (10) according to any one of the preceding claims.
